# EUROPEAN PATENT APPLICATION

(11) **EP 4 764 781 A1**
(43) Date of publication of application: **24.06.2026**
(21) Application number: 25835931.4
(22) Date of filing: 06.06.2025
(51) Int. Cl.: G06F 1/18

(54) **SERVER INTERCONNECTION SYSTEM, COMMUNICATION METHOD, SERVER, DEVICE, MEDIUM AND PRODUCT**

(30) Priority: 08.07.2024 CN 202410907506
(71) Applicant: Suzhou Metabrain Intelligent Technology Co., Ltd., Suzhou, Jiangsu 215000 (CN)
(72) Inventor: YU, Quanquan, Suzhou, Jiangsu 215000 (CN); FU, Shuilun, Suzhou, Jiangsu 215000 (CN); WANG, Huanchao, Suzhou, Jiangsu 215000 (CN)
(74) Representative: von Bülow & Tamada
(86) International application number: PCT/CN2025/099726
(87) International publication number: WO 2026/012028

(57) **Abstract**

Provided in the embodiments of the present application are a server interconnection system, a communication method, a server, a device, a medium and a product, which are applied to the technical field of servers. The server interconnection system comprises: a host processor module; a riser card module, which comprises a riser card control board and at least two riser card wire bonding boards; and external plug-in card slots, the number of which is the same as the number of riser card wire bonding boards, wherein the host processor module is directly interconnected with the corresponding external plug-in card slots to transmit a high-speed signal and/or a bypass signal, and the host processor module is connected to the corresponding external plug-in card slots by means of the riser card control board and the corresponding riser card wire bonding boards, so as to transmit a power supply signal and/or a low-speed signal. Optimization of a riser card in the server interconnection system is achieved by splitting the riser card into a riser card module consisting of one riser card control board, a plurality of card wire bonding boards and a plurality of external plug-in card slots, and the interconnection between a host processor module and a riser card no longer uses a fixed-position board-to-board connector.

## Description

### CROSS-REFERENCE TO RELATED APPLICATION

The present disclosure claims the priority of Chinese patent application filed on July 8, 2024 before the CNIPA, China National Intellectual Property Administration with the application number of 202410907506.4, and the title of "SERVER INTERCONNECTION SYSTEM, COMMUNICATION METHOD, SERVER, DEVICE, MEDIUM, AND PRODUCT", which is incorporated herein in its entirety by reference.

### FIELD

The present disclosure relates to the field of server technologies, and in particular to a server interconnection system, a communication method, a server, a device, a medium, and a product.

### BACKGROUND

With the rapid development of Internet technology, cloud services and cloud computing are booming, and servers, as key devices supporting various applications in the Internet, are becoming more and more important. To ensure the compatibility of various components of servers in data centers and enterprise infrastructure, form dimensions of host processor modules (HPMs) are standardized and defined in full width of a modular hardware system, standardized interfaces and form dimensions are provided to accommodate the installation of standard rack servers.

In related art, an interconnection method between a host processor module and a riser card includes board-to-board interconnection, wire-board interconnection, and hybrid interconnection, among which board-to-board interconnection is more common. In the board-to-board interconnection method, on a board side where the host processor module is located, a plurality of sets of board-to-board connectors with fixed positions are designed, which are used to connect various forms of riser cards, thereby forming different rear window configuration forms for use.

Since the board-to-board connectors have the highest position priority and are strongly coupled with structural dimensions of a chassis, the board-to-board connectors with fixed positions require that other connectors and chips on the host processor module need to give way to the board-to-board connectors. This poses a great challenge to wiring and device layout in the host processor module, limits the rear window layout of the server, and results in the design of the riser card heavily relying on the position and structure of the riser card connector in the server, leading to a wide variety of riser cards and low reusability.

### SUMMARY

In view of the above problems, a server interconnection system, a communication method, a server, a device, a medium, and a product are proposed to overcome or at least partially solve the above problems, including:

A server interconnection system, including:
a host processor module;
a riser card module including a riser card control board and at least two riser card soldering boards; and
add-in card slots, where a number of the add-in card slots is consistent with a number of the riser card soldering boards, the host processor module is directly interconnected with a corresponding add-in card slot for transmitting high-speed signals and/or bypass signals, and the host processor module is connected to a corresponding add-in card slot through the riser card control board and a corresponding riser card soldering board for transmitting power supply signals and/or low-speed signals.

In an embodiment, the add-in card slot is connected to an add-in card connector in the host processor module through high-speed cables to transmit the high-speed signals and/or the bypass signals between the add-in card connector and the add-in card slot;
the riser card soldering board is connected between the riser card control board and the add-in card slot;
the riser card control board is connected to the host processor module through soldering wires or a connector, to transmit the power supply signals and/or the low-speed signals between the host processor module and the add-in card slot through the soldering wires or the connector, the riser card control board, and the riser card soldering board.

In an embodiment, other components are connected to the host processor module, and the other components are connected to the riser card control board through the soldering wires or the connector between the host processor module and the riser card control board, and are connected to the add-in card slot through the riser card control board and the riser card soldering board, to transmit the power supply signals and/or the low-speed signals between the other components and the add-in card slot.

In an embodiment, the other components include a baseboard management controller, and the riser card control board is provided with a switch chip;
the baseboard management controller is connected to the switch chip through the soldering wires or the connector between the host processor module and the riser card control board;
the switch chip is provided with two serial communication buses for each of add-in card slots and is connected to the add-in card slot through the two serial communication buses.

In an embodiment, the two serial communication buses include a first serial communication bus and a second serial communication bus; communication signals are transmitted between the baseboard management controller and the add-in card slot through the first serial communication bus;
the riser card control board is further provided with an expansion chip, the expansion chip is connected to the switch chip through the second serial communication bus, and configured to monitor whether an add-in card is inserted into the add-in card slot and feed back a monitoring signal to the baseboard management controller through the second serial communication bus.

In an embodiment, the riser card control board is further provided with a field replace unit, and the field replace unit is connected to the switch chip through the second serial communication bus; communication signals are transmitted between the field replace unit and the baseboard management controller through the second serial communication bus and the switch chip.

In an embodiment, the riser card control board is further provided with a temperature sensor, and the temperature sensor is connected to the switch chip through the second serial communication bus; communication signals are transmitted between the temperature sensor and the baseboard management controller through the second serial communication bus and the switch chip.

In an embodiment, the other components include a first power conversion chip, and the riser card control board is provided with a second power conversion chip;
the first power conversion chip is connected to the second power conversion chip through the soldering wires or the connector between the host processor module and the riser card control board;
the second power conversion chip is respectively connected to each of the add-in card slots, and is configured to transmit a processed power supply signal to each add-in card slot.

In an embodiment, the riser card control board is provided with a sideband connector, the riser card soldering board is provided with a gold finger connector, and the riser card control board and the riser card soldering board are connected through the sideband connector and the gold finger connector.

In an embodiment, a number of the sideband connector and a number of the gold finger connector are same as the number of add-in card slots.

In an embodiment, the host processor module is further provided with a central processing unit and/or a logic processing element, the central processing unit and/or the logic processing element is connected to the add-in card connector, and the high-speed signals and/or the bypass signals transmitted between the add-in card connector and the add-in card slot are signals output by the central processing unit and/or the logic processing element.

In an embodiment, the riser card module further includes at least two module structure positioning members, and the riser card module is fixed to a board card where the host processor module is located through the at least two module structure positioning members.

In an embodiment, the add-in card slot is a card slot for inserting peripheral component interconnect express (PCIe) add-in cards, the high-speed cables are PCIe-based cables, and the add-in card connector is a connector connected to the PCIe add-in cards.

A communication method based on a server interconnection system, the server interconnection system includes a host processor module, a riser card module, and add-in card slots, the riser card module includes a riser card control board and at least two riser card soldering boards, a number of the add-in card slots is consistent with a number of the riser card soldering boards, the host processor module is directly interconnected with a corresponding add-in card slot, and the host processor module is connected to a corresponding add-in card slot through the riser card control board and a corresponding riser card soldering board; the communication method includes:
transmitting high-speed signals and/or bypass signals between the host processor module and the corresponding add-in card slot through a direct interconnection structure between the host processor module and the corresponding add-in card slot; and
transmitting power supply signals and/or low-speed signals between the host processor module and the corresponding add-in card slot through the riser card control board and the corresponding riser card soldering board.

In an embodiment, the add-in card slot is connected to an add-in card connector in the host processor module through high-speed cables, the riser card soldering board is connected between the riser card control board and the add-in card slot, and the riser card control board is connected to the host processor module through soldering wires or a connector;
where transmitting the high-speed signals and/or the bypass signals between the host processor module and the corresponding add-in card slot through the direct interconnection structure between the host processor module and the corresponding add-in card slot includes: transmitting the high-speed signals and/or the bypass signals between the add-in card connector and the add-in card slot through the high-speed cables between the add-in card connector and the add-in card slot;
transmitting the power supply signals and/or the low-speed signals between the host processor module and the corresponding add-in card slot through the riser card control board and the corresponding riser card soldering board includes: transmitting the power supply signals and/or the low-speed signals between the host processor module and the add-in card slot through the soldering wires or the connector between the host processor module and the riser card control board and via the riser card control board and the riser card soldering board.

In an embodiment, other components are connected to the host processor module, and the other components are connected to the riser card control board through the soldering wires or the connector between the host processor module and the riser card control board, and are connected to the add-in card slot through the riser card control board and the riser card soldering board;
where transmitting the power supply signals and/or the low-speed signals between the host processor module and the add-in card slot through the soldering wires or the connector between the host processor module and the riser card control board and via the riser card control board and the riser card soldering board includes:
transmitting the low-speed signals between other components and the add-in card slot through the soldering wires or the connector between the host processor module and the riser card control board and via the riser card control board and the riser card soldering board.

In an embodiment, the other components include a baseboard management controller, and the riser card control board is provided with a switch chip; the baseboard management controller is connected to the switch chip through the soldering wires or the connector between the host processor module and the riser card control board; the switch chip is provided with two serial communication buses for each of add-in card slots and is connected to the add-in card slot through the two serial communication buses;
where transmitting the low-speed signals between other components and the add-in card slot through the soldering wires or the connector between the host processor module and the riser card control board and via the riser card control board and the riser card soldering board includes:
transmitting the low-speed signals between the baseboard management controller and the add-in card slot through the soldering wires or the connector between the host processor module and the riser card control board and via the switch chip, the two serial communication buses, and the riser card soldering board.

In an embodiment, the two serial communication buses include a first serial communication bus and a second serial communication bus, and communication signals are transmitted between the baseboard management controller and the add-in card slot through the first serial communication bus;
the riser card control board is further provided with an expansion chip, the expansion chip is connected to the switch chip through the second serial communication bus, and configured to monitor whether an add-in card is inserted into the add-in card slot and feed back a monitoring signal to the baseboard management controller through the second serial communication bus;
where transmitting the low-speed signals between the baseboard management controller and the add-in card slot through the soldering wires or the connector between the host processor module and the riser card control board and via the switch chip, the two serial communication buses, and the riser card soldering board includes:
   transmitting the communication signals between the baseboard management controller and the add-in card slot through the soldering wires or the connector between the host processor module and the riser card control board and via the switch chip, the first serial communication bus, and the riser card soldering board; and
   monitoring whether an add-in card is inserted into the add-in card slot through the expansion chip and via the riser card soldering board to obtain the monitoring signal, and feeding back the monitoring signal to the baseboard management controller through the soldering wires or the connector between the host processor module and the riser card control board and via the expansion chip, the second serial communication bus, and the switch chip.

In an embodiment, the other components include a first power conversion chip, and the riser card control board is provided with a second power conversion chip; the first power conversion chip is connected to the second power conversion chip through the soldering wires or the connector between the host processor module and the riser card control board; the second power conversion chip is respectively connected to each of the add-in card slots, and is configured to transmit a processed power supply signal to each add-in card slot;
where transmitting the low-speed signals between other components and the add-in card slot through the soldering wires or the connector between the host processor module and the riser card control board and via the riser card control board and the riser card soldering board includes:
transmitting the low-speed signals between the first power conversion chip and the add-in card slot through the soldering wires or the connector between the host processor module and the riser card control board and via the second power conversion chip and the riser card soldering board.

A server, including the server interconnection system as described above.

An electronic device, including a processor, a memory, and a computer program stored on the memory and capable of running on the processor, where the above method is implemented when the computer program is executed by the processor.

A computer non-volatile readable storage medium, on which a computer program is stored. When the computer program is executed by a processor, the above method is implemented.

A computer program product including a computer program that, when executed by a processor, implements the method described above.

The present embodiment has the following advantages:

In the embodiments of the present disclosure, the server interconnection system includes the host processor module, the riser card module, and the add-in card slots. The riser card module includes the riser card control board and at least two riser card soldering boards. The number of the add-in card slots is equal to the number of the riser card soldering boards. The host processor module is directly interconnected with the corresponding add-in card slot for transmitting high-speed signals and/or bypass signals. The host processor module is connected to the corresponding add-in card slot through the riser card control board and the corresponding riser card soldering board for transmitting power supply signals and/or low-speed signals, achieving optimization of the riser card in the server interconnection system. The riser card is split into the riser card module consisting of a riser card control board, a plurality of riser card soldering boards, and the add-in card slots. The interconnection between the host processor module and the riser card no longer uses the board-to-board connectors with fixed positions, which reduces the difficulty of wiring and layout in the host processor module, and also reduces restrictions on the layout of the rear window in the server. Moreover, the design of the riser card does not depend on the position and structure of the riser card connector in the server, which improves the reusability of the riser card.

### BRIEF DESCRIPTION OF THE DRAWINGS

In order to explain the technical solution of the present disclosure more clearly, accompanying drawings needed in the description of the present disclosure will be briefly introduced below. Obviously, the accompanying drawings in the following description are only some embodiments of the present disclosure. For a person skilled in the art, other accompanying drawings may be obtained according to these accompanying drawings without creative labor.
FIG. 1 is a schematic diagram of a server in the related art.
FIG. 2 is a schematic diagram of connection of add-in cards in the related art.
FIG. 3 is a schematic diagram of a server interconnection system in the related art.
FIG. 4 is a schematic diagram of a server interconnection system provided by some embodiments of the present disclosure.
FIG. 5 is a schematic diagram of a server provided by some embodiments of the present disclosure.
FIG. 6 is a schematic diagram of another server provided by some embodiments of the present disclosure.
FIG. 7 is a flowchart of a communication method based on a server interconnection system provided in some embodiments of the present disclosure.
FIG. 8 is a structural block diagram of an electronic device provided by some embodiments of the present disclosure.
FIG. 9 is a structural block diagram of a non-volatile readable storage medium provided in some embodiments of the present disclosure.
FIG. 10 is a structural block diagram of a program product provided by some embodiments of the present disclosure.

### DETAILED DESCRIPTION

In order to make the above purpose, features, and advantages of the present disclosure more obvious and easy to understand, the following will provide further detailed explanations of the present disclosure in conjunction with the accompanying drawings and specific embodiments. Obviously, the described embodiments are a part of the embodiments of the present disclosure, rather than all the embodiments. Based on the embodiments in the present disclosure, all other embodiments obtained by ordinary skilled persons in this field without creative labor are within the protection scope of the present disclosure.

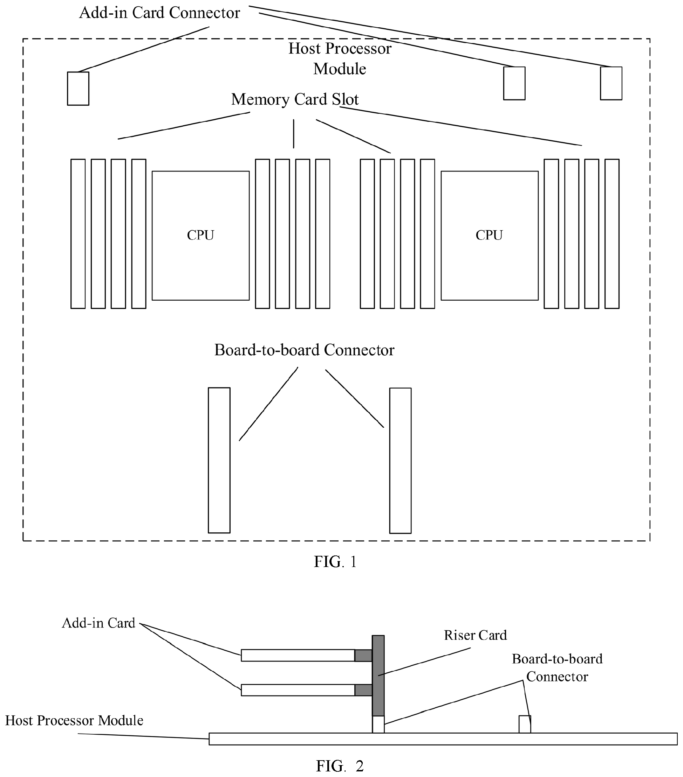

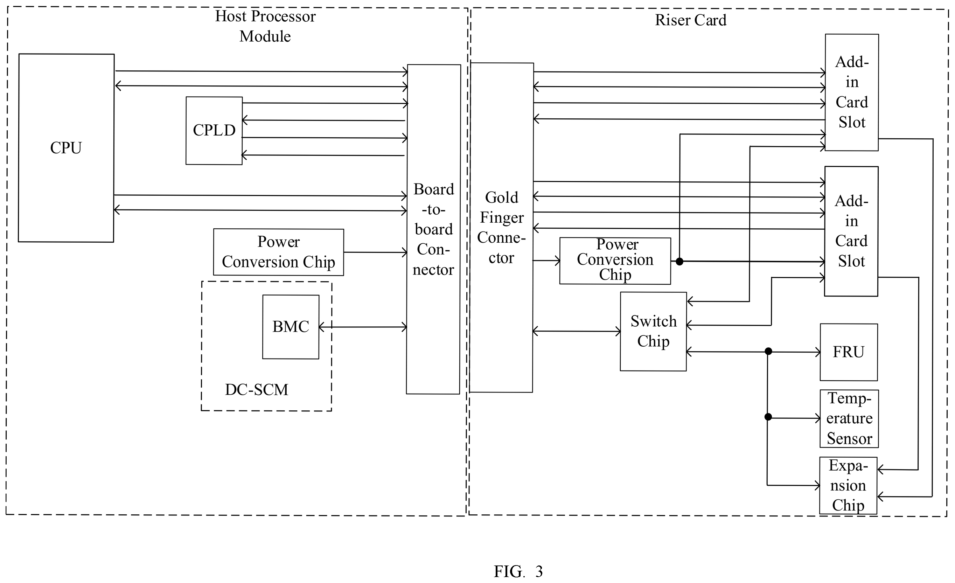

In the board-to-board interconnection method, as shown in FIG. 1, on a board side where a host processor module is located, a plurality of sets of board-to-board connectors with fixed positions are designed, which are used to connect various forms of riser cards, thereby forming different rear window configuration forms for use. In practical applications, as shown in FIG. 2 and FIG. 3, an add-in card is inserted into the riser card, and the riser card is connected to a board-to-board connector in the host processor module through a gold finger connector, thereby enabling data transmission between the add-in card and a central processing unit (CPU), a complex programmable logic device (CPLD), a power conversion chip, and a baseboard management controller (BMC) on the host processor module.

Specifically, to meet peripheral component interconnect express (PCIe) expansion requirements of the rear window, a plurality of board-to-board connectors will be designed at fixed positions of the rear window for the host processor module. For various forms of riser cards, one end is generally installed on the board-to-board connector through gold fingers, and the other end is connected to one or more add-in cards through an add-in card slot.

In addition to the gold fingers interconnected with the host processor module, the riser card also includes a plurality of add-in card slots for add-in cards, a power conversion chip for power supply, and a switch chip for the baseboard management controller to access through a system management bus (SMBUS) such as an inter-integrated circuit (I2C, which a serial communication bus). The baseboard management controller then accesses the riser card's field replace unit (FRU), temperature sensor, and input/output (IO) expansion chip for monitoring whether an add-in card is in place through time-sharing access.

After the PCIe bus on the host processor module is connected to gold fingers of the riser card through the board-to-board connector, it is interconnected to the add-in card slot (such as PCIe card slot) through a metal wire on the board. Some riser cards also support that the PCIe bus on the host processor module is connected to a connector/solder joint on the riser card through a PCIe connector, and then connected to the add-in card slot through the metal wiring on the board.

In the case of using the board-to-board interconnection, the position of the board-to-board connector is limited for the host processor module to cooperate with PCIe add-in cards connected to the rear window chassis, and other devices on the host processor module have to move their positions accordingly, which eventually leads to the difficulty in the layout of the host processor module. Moreover, since the position of the board-to-board connector is far from the CPU, a wiring path of the PCIe bus is long, and crosses connectors, metal wires on the board, etc., on the riser card, which may easily lead to impedance design failure and affect external insertion requirements of high-speed PCIe.

Moreover, due to the structural influence, the riser card needs to be designed in various styles (such as the left, middle and right positions of the rear window), it is difficult to achieve reuse between platforms or across generations, resulting in high design costs. In the principle design topology of the riser card, both high-speed and low-speed signals are implemented on an independent board card. With the increase of PCIe speed, the riser card needs to be continuously iteratively upgraded to meet the requirements, resulting in poor reusability.

In some embodiments of the present disclosure, the interconnection method of board-to-board connectors with fixed positions is no longer adopted, but a riser card is divided into a riser card module consisting of a riser card control board and a plurality of riser card soldering boards. Power supply signals and low-speed signals are transmitted to the add-in card slot through the riser card control board and riser card soldering board, and high-speed signals and bypass signals are directly interconnected with the add-in card slot (such as PCIe slot) on the riser card module through an add-in card connector (such as PCIe connector) on the host processor module via cables.

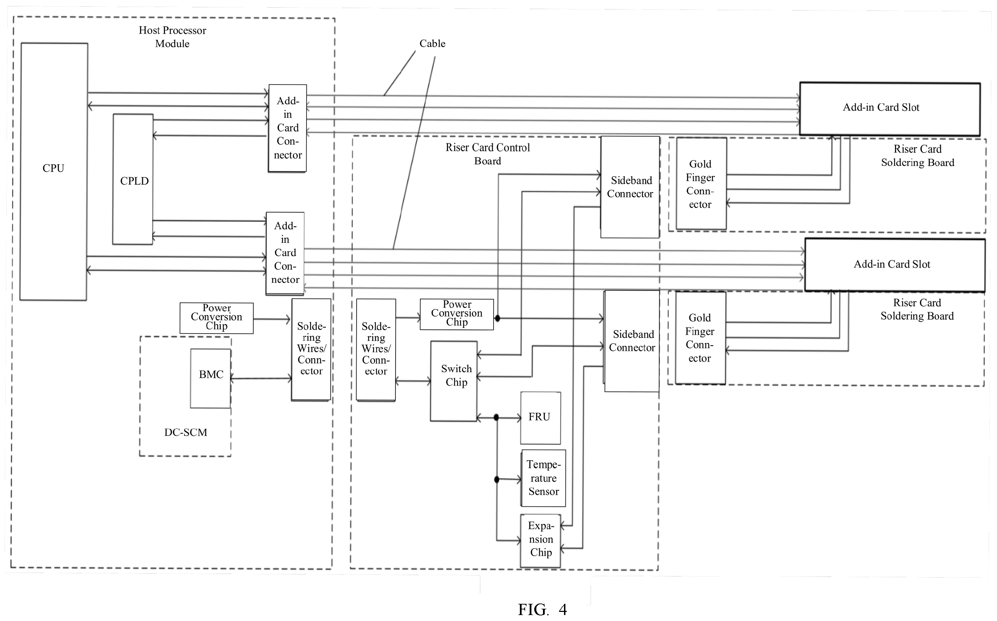

As shown in FIG. 4, FIG. 5, and FIG. 6, the host processor module is interconnected with the riser card module through add-in card connectors via cables. The add-in card connector is small and can be placed relatively freely, eliminating the need to design independent, fixed position board-to-board connectors for the riser card module. The riser card module can also be designed into a uniform shape and size without being limited by the position, and ultimately connected to riser cards through one or more add-in card slots.

For the riser card module, it is divided into two independent parts.

The first part is the riser card control board, which is interconnected with the host processor module through soldering wires or connector to obtain power supply required for the add-in card slot and the local area. The riser card control board is also interconnected with the baseboard management controller on the data center secure control module (DC-SCM) through the SMBUS for the baseboard management controller to access the switch chip. The baseboard management controller accesses the riser card's field replace unit, temperature sensor, and IO expansion chip for monitoring whether an add-in card is in place through time-sharing access.

The second part is a reusable standard form of riser card soldering board, which is connected to a sideband connector on the riser card control board through a gold finger connector, and then connects the power supply and I2C bus to the add-in card slot on the board. The in-place (PRSNT) signal of the add-in card slot can be fed back to the IO expansion chip on the riser card control board to inform the baseboard management controller whether the add-in card is in place.

In practical applications, different numbers of riser card soldering boards can be configured according to the number of add-in cards to be configured for the rear window, and the riser card soldering boards and the riser card control board are combined into a whole (as shown in FIG. 4, one riser card control board corresponds to two riser card soldering boards), that is, the riser card module. Since neither the riser card control board nor the riser card soldering boards have on-board metal wires of the PCIe bus, requirements for board-manufacturing process are relatively low, which might reduce the cost, reduce the number of types of riser cards and improve the reusability.

Moreover, the PCIe bus and necessary bypass low-speed signals on the host processor module are directly soldered to pins of the add-in card slot on the riser card soldering board through the riser card connector (such as PCIe connector) via cables, without passing through the riser card module. The add-in card connector can be placed close to the CPU without having to be close to the rear window, reducing the wiring path and meeting impedance requirements of the high-speed PCIe bus.

Overall, according to some embodiments of the present disclosure, the layout difficulty of the host processor module has been reduced, the design cost has been reduced, the number of types of riser cards has been reduced, and the reusability of platforms and cross generations have been effectively improved. The wiring path of the PCIe bus has been optimized, which makes it easier to meet the impedance requirements of the high-speed PCIe bus in system design.

Some embodiments of the present disclosure will be further explained as follows. As shown in FIG. 4, FIG. 5, and FIG. 6, a server interconnection system includes a host processor module, a riser card module, and add-in card slots.

The riser card module includes a riser card control board and at least two riser card soldering boards.

The number of the add-in card slots is consistent with the number of the riser card soldering boards, the host processor module is directly interconnected with a corresponding add-in card slot for transmitting high-speed signals and/or bypass signals, and the host processor module is connected to a corresponding add-in card slot through the riser card control board and a corresponding riser card soldering board for transmitting power supply signals and/or low-speed signals.

In some embodiments of the present disclosure, the specific structure is as follows:
the add-in card slot is connected to an add-in card connector in the host processor module through high-speed cables to transmit the high-speed signals and/or the bypass signals between the add-in card connector and the add-in card slot;
the riser card soldering board is connected between the riser card control board and the add-in card slot;
the riser card control board is connected to the host processor module through soldering wires or a connector, to transmit the power supply signals and/or the low-speed signals between the host processor module and the add-in card slot through the soldering wires or the connector, the riser card control board, and the riser card soldering board.

In some embodiments of the present disclosure, other components are connected to the host processor module.

The other components are connected to the riser card control board through the soldering wires or the connector between the host processor module and the riser card control board, and are connected to the add-in card slot through the riser card control board and the riser card soldering board, to transmit the power supply signals and/or the low-speed signals between the other components and the add-in card slot.

In some examples, other components can include a baseboard management controller and a power conversion chip. The baseboard management controller can be deployed on the data center secure control module. The baseboard management controller is connected to the switch chip on the riser card control board through the SMBUS bus.

The add-in card slot is a card slot for inserting peripheral component interconnect express (PCIe) add-in cards, the high-speed cables are PCIe-based cables, and the add-in card connector is a connector connected to the PCIe add-in cards, that is, a PCIe connector.

In some examples, a riser card module can be configured with one or more riser card soldering boards, each riser card soldering board corresponds to an add-in card slot, which can be used for inserting add-in cards. The one or more riser card soldering boards can be connected to the same riser card control board, that is, one riser card control board can be connected to a plurality of riser card soldering boards, and then be connected to a plurality of add-in card slots and add-in cards. For example, one riser card control board can correspond to two riser card soldering boards, three riser card soldering boards, four riser card soldering boards, etc.

In practical applications, the power supply signals and/or low-speed signals are transmitted between other components and the add-in card slot through the soldering wires or the connector between the host processor module and the riser card control board, and via the riser card control board and riser card soldering board. That is, on the one hand, low-speed signals sent by other components are transmitted to the riser card control board through the soldering wires or connector between the host processor module and the riser card control board. The riser card control board transmits the low-speed signals to the riser card soldering board, and the riser card soldering board transmits the power signals and/or low-speed signals to the add-in card slot. The add-in card slot then transmits the power signals to the add-in card. On the other hand, the add-in card transmits the power signals and/or low-speed signals to the add-in card slot, and the add-in card slot transmits the power signals and/or low-speed signals to the riser card soldering board. The riser card soldering board transmits the power signals and/or low-speed signals to the riser card control board. The riser card control board transmits the power supply signals and/or low-speed signals to other components through soldering wires or connector between the host processor module and the riser card control board.

In practical applications, the high-speed signals and/or bypass signals are transmitted between the add-in card connector and the add-in card slot through the high-speed cables between the add-in card connector and the add-in card slot. That is, on the one hand, the add-in card connector directly transmits the high-speed signals and/or bypass signals to the add-in card slot through the high-speed cables, and the add-in card slot then transmits the high-speed signals and/or bypass signals to the add-in card. On the other hand, the add-in card transmits the high-speed signals and/or bypass signals to the add-in card slot, and the add-in card slot transmits the high-speed signals and/or bypass signals to the add-in card connector through the high-speed cables.

In some examples, the high-speed signals and/or the bypass signals may include clock signals (CLK), wake-up signals (WAKE), reset signals (PERST), and other signals.

In some embodiments of the present disclosure, the interconnection method of board-to-board connectors with fixed positions is no longer adopted, but a riser card is divided into a riser card module consisting of a riser card control board and a plurality of riser card soldering boards. The power supply signals and low-speed signals are transmitted to the add-in card slot through the riser card control board and riser card soldering board, and the high-speed signals and bypass signals are directly interconnected with the add-in card slot (such as PCIe slot) on the riser card module through the add-in card connector (such as PCIe connector) on the host processor module via cables.

In some embodiments of the present disclosure, the other components include a baseboard management controller, and the riser card control board is provided with a switch chip; the baseboard management controller is connected to the switch chip through the soldering wires or the connector between the host processor module and the riser card control board.

The switch chip is provided with two serial communication buses for each of add-in card slots and is connected to the add-in card slot through the two serial communication buses.

In some examples, the switch chip can be an I2C switch chip.

In practical applications, the low-speed signals are transmitted between the baseboard management controller and the add-in card slot through the soldering wires or connector between the host processor module and the riser card control board, via the switch chip, two serial communication buses, and riser card soldering board.

In practical applications, different numbers of riser card soldering boards can be configured according to the number of add-in cards to be configured for the rear window, and the riser card soldering boards and the riser card control board are combined into a whole (as shown in FIG. 4, one riser card control board corresponds to two riser card soldering boards), that is, the riser card module. Since neither the riser card control board nor the riser card soldering boards have on-board metal wires of the PCIe bus, requirements for board-manufacturing process are relatively low, which might reduce the cost, reduce the number of types of riser cards and improve the reusability.

In some embodiments of the present disclosure, the two serial communication buses include a first serial communication bus and a second serial communication bus; communication signals are transmitted between the baseboard management controller and the add-in card slot through the first serial communication bus.

In practical applications, the communication signals are transmitted between the baseboard management controller and the add-in card slot through the soldering wires or connector between the host processor module and the riser card control board, via the switch chip, the first serial communication bus, and the riser card soldering board.

In some embodiments of the present disclosure, the riser card control board is further provided with an expansion chip, the expansion chip is connected to the switch chip through the second serial communication bus, and configured to monitor whether an add-in card is inserted into the add-in card slot and feed back a monitoring signal to the baseboard management controller through the second serial communication bus.

In practical applications, whether an add-in card is inserted into the add-in card slot is monitored through the expansion chip and via the riser card soldering board to obtain the monitoring signal, and the monitoring signal is fed back to the baseboard management controller through the soldering wire or connector between the host processor module and the riser card control board, via the extension chip, the second serial communication bus, and the switch chip.

That is, the baseboard management controller in the data center secure control module is connected to the switch chip via the SMBUS bus through the soldering wire or connector between the host processor module and the riser card control board. The switch chip can convert data between the SMBUS bus and the two serial communication buses, thereby achieving communication between the baseboard management controller and the add-in card in the add-in card slot.

The first serial communication bus is used to transmit communication signals between the baseboard management controller and the add-in card slot, and the second serial communication bus is used to transmit monitoring signals between the baseboard management controller and the expansion chip, thereby enabling communication with the add-in card and the monitoring of whether the add-in card is inserted.

In some embodiments of the present disclosure, the riser card control board is further provided with a field replace unit, and the field replace unit is connected to the switch chip through the second serial communication bus; communication signals are transmitted between the field replace unit and the baseboard management controller through the second serial communication bus and the switch chip.

In practical applications, the communication signals are transmitted between the field replace unit and the baseboard management controller through the soldering wires or connector between the host processor module and the riser card control board, via the switch chip and the second serial communication bus.

In some embodiments of the present disclosure, the riser card control board is further provided with a temperature sensor, and the temperature sensor is connected to the switch chip through the second serial communication bus; communication signals are transmitted between the temperature sensor and the baseboard management controller through the second serial communication bus and the switch chip.

In practical applications, the communication signals are transmitted between the temperature sensor and the baseboard management controller through the soldering wires or connector between the host processor module and the riser card control board, via the switch chip and the second serial communication bus.

In some embodiments of the present disclosure, the other components include a first power conversion chip, and the riser card control board is provided with a second power conversion chip; the first power conversion chip is connected to the second power conversion chip through the soldering wires or the connector between the host processor module and the riser card control board; the second power conversion chip is respectively connected to each of the add-in card slots, and is configured to transmit a processed power supply signal to each add-in card slot.

In practical applications, the low-speed signals are transmitted between the first power conversion chip and the add-in card slot through the soldering wires or connector between the host processor module and the riser card control board, via the second power conversion chip and the riser card soldering board.

In some embodiments of the present disclosure, the riser card control board is interconnected with the host processor module through the soldering wires or connector to obtain the power supply required for the add-in card slot and the local area, and is interconnected with the baseboard management controller on the data center secure control module through the SMBUS bus for the baseboard management controller to access the switch chip. The baseboard management controller accesses the riser card's field replace unit, temperature sensor, and IO expansion chip for monitoring whether an add-in card is in place through time-sharing access, thereby ensuring the basic functions of the riser card.

In some embodiments of the present disclosure, the riser card control board is provided with a sideband connector, the riser card soldering board is provided with a gold finger connector, and the riser card control board and the riser card soldering board are connected through the sideband connector and the gold finger connector.

In some embodiments of the present disclosure, the number of the sideband connector and the number of the gold finger connector are same as the number of add-in card slots.

In some examples, other connection methods can also be used between the riser card control board and the riser card soldering board, for example, soldering wires are used to connect the riser card control board and the riser card soldering board.

In some embodiments of the present disclosure, the host processor module is further provided with a central processing unit and/or a logic processing element, the central processing unit and/or the logic processing element is connected to the add-in card connector, and the high-speed signals transmitted between the add-in card connector and the add-in card slot are signals output by the central processing unit and/or the logic processing element.

In practical applications, through the high-speed cables between the add-in card connector and the add-in card slot, the high-speed signals output by the central processing unit and/or logic processing element to the add-in card inserted in the add-in card slot are transmitted between the add-in card connector and the add-in card slot. That is, the high-speed signals are output by the central processing unit and/or the logic processing element and sent to the add-in card. The high-speed signals can also be sent to the central processing unit and/or the logic processing element by the add-in card.

In some embodiments of the present disclosure, the PCIe bus and necessary bypass low-speed signals on the host processor module are directly soldered to pins of the add-in card slot on the riser card soldering board through the riser card connector via cables, without passing through the riser card module. The add-in card connector can be placed close to the CPU without having to be close to the rear window, reducing the wiring path and meeting impedance requirements of the high-speed PCIe bus.

In some embodiments of the present disclosure, the server interconnection system includes the host processor module, the riser card module, and the add-in card slots. The riser card module includes the riser card control board and at least two riser card soldering boards. The number of the add-in card slots is equal to the number of the riser card soldering boards. The host processor module is directly interconnected with the corresponding add-in card slot for transmitting high-speed signals and/or bypass signals. The host processor module is connected to the corresponding add-in card slot through the riser card control board and the corresponding riser card soldering board for transmitting power supply signals and/or low-speed signals, achieving optimization of the riser card in the server interconnection system. The riser card is split into the riser card module consisting of a riser card control board, a plurality of riser card soldering boards, and the add-in card slots. The interconnection between the host processor module and the riser card no longer uses the board-to-board connectors with fixed positions, which reduces the difficulty of wiring and layout in the host processor module, and also reduces restrictions on the layout of the rear window in the server. Moreover, the design of the riser card does not depend on the position and structure of the riser card connector in the server, which improves the reusability of the riser card.

The following is an explanation of the installation process for the riser card module:
1. the add-in card slot on the riser card soldering board is soldered with cables and then installed on the riser card soldering board;
2. two identical riser card soldering boards (labeled as 0 and 1) are respectively connected to the riser card control board (the riser card control board needs to support at least two riser card soldering boards) through gold fingers, and combined with necessary structural components (for example, structural positioning members, locking devices, etc.) to form a riser card module that can support two add-in card slots;
3. the host processor module provides power supply and SMBUS bus connection to the riser card control board on the riser card module through power supply and switch chips;
4. the host processor module provides PCIe bus and necessary bypass signal connections to the riser card soldering board on the riser card module through the add-in card connector via cables.

After the above installation is completed, the add-in card is installed on the riser card module and the server is powered on, so that the function of the add-in card might be achieved. In some examples, when it is necessary to implement one add-in card slot, three add-in card slots, and other multiple add-in card slots for the riser card under this configuration, the number of the soldering board should be changed to the corresponding number and match an appropriate riser card control board and structural components.

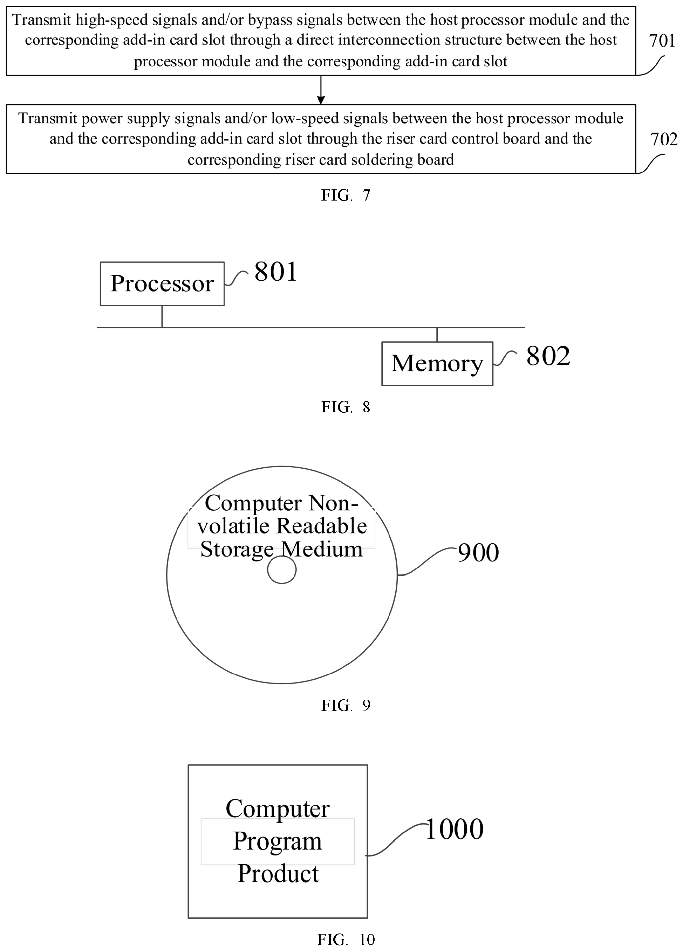

Referring to FIG. 7, a flowchart of a communication method based on a riser card module in a server provided by some embodiments of the present disclosure is shown. The server interconnection system includes a host processor module, a riser card module, and add-in card slots, the riser card module includes a riser card control board and at least two riser card soldering boards, a number of the add-in card slots is consistent with a number of the riser card soldering boards, the host processor module is directly interconnected with a corresponding add-in card slot, and the host processor module is connected to a corresponding add-in card slot through the riser card control board and a corresponding riser card soldering board.

Specifically, the communication method can include the following steps:
step 701, high-speed signals and/or bypass signals are transmitted between the host processor module and the corresponding add-in card slot through a direct interconnection structure between the host processor module and the corresponding add-in card slot; and
step 702, power supply signals and/or low-speed signals are transmitted between the host processor module and the corresponding add-in card slot through the riser card control board and the corresponding riser card soldering board.

In some embodiments of the present disclosure, the add-in card slot is connected to an add-in card connector in the host processor module through high-speed cables, the riser card soldering board is connected between the riser card control board and the add-in card slot, and the riser card control board is connected to the host processor module through soldering wires or a connector; where transmitting the high-speed signals and/or the bypass signals between the host processor module and the corresponding add-in card slot through the direct interconnection structure between the host processor module and the corresponding add-in card slot includes: transmitting the high-speed signals and/or the bypass signals between the add-in card connector and the add-in card slot through the high-speed cables between the add-in card connector and the add-in card slot;
transmitting the power supply signals and/or the low-speed signals between the host processor module and the corresponding add-in card slot through the riser card control board and the corresponding riser card soldering board includes: transmitting the power supply signals and/or the low-speed signals between the host processor module and the add-in card slot through the soldering wires or the connector between the host processor module and the riser card control board and via the riser card control board and the riser card soldering board.

In some embodiments of the present disclosure, other components are connected to the host processor module, and the other components are connected to the riser card control board through the soldering wires or the connector between the host processor module and the riser card control board, and are connected to the add-in card slot through the riser card control board and the riser card soldering board; where transmitting the power supply signals and/or the low-speed signals between the host processor module and the add-in card slot through the soldering wires or the connector between the host processor module and the riser card control board and via the riser card control board and the riser card soldering board includes:
transmitting the low-speed signals between other components and the add-in card slot through the soldering wires or the connector between the host processor module and the riser card control board and via the riser card control board and the riser card soldering board.

In some embodiments of the present disclosure, the other components include a baseboard management controller, and the riser card control board is provided with a switch chip; the baseboard management controller is connected to the switch chip through the soldering wires or the connector between the host processor module and the riser card control board; the switch chip is provided with two serial communication buses for each of add-in card slots and is connected to the add-in card slot through the two serial communication buses;
where transmitting the low-speed signals between other components and the add-in card slot through the soldering wires or the connector between the host processor module and the riser card control board and via the riser card control board and the riser card soldering board includes:
transmitting the low-speed signals between the baseboard management controller and the add-in card slot through the soldering wires or the connector between the host processor module and the riser card control board and via the switch chip, the two serial communication buses, and the riser card soldering board.

In some embodiments of the present disclosure, the two serial communication buses include a first serial communication bus and a second serial communication bus, and communication signals are transmitted between the baseboard management controller and the add-in card slot through the first serial communication bus;
the riser card control board is further provided with an expansion chip, the expansion chip is connected to the switch chip through the second serial communication bus, and configured to monitor whether an add-in card is inserted into the add-in card slot and feed back a monitoring signal to the baseboard management controller through the second serial communication bus;
where transmitting the low-speed signals between the baseboard management controller and the add-in card slot through the soldering wires or the connector between the host processor module and the riser card control board and via the switch chip, the two serial communication buses, and the riser card soldering board includes:
   transmitting the communication signals between the baseboard management controller and the add-in card slot through the soldering wires or the connector between the host processor module and the riser card control board and via the switch chip, the first serial communication bus, and the riser card soldering board; and
   monitoring whether an add-in card is inserted into the add-in card slot through the expansion chip and via the riser card soldering board to obtain the monitoring signal, and feeding back the monitoring signal to the baseboard management controller through the soldering wires or the connector between the host processor module and the riser card control board and via the expansion chip, the second serial communication bus, and the switch chip.

In some embodiments of the present disclosure, the riser card control board is further provided with a field replace unit, and the field replace unit is connected to the switch chip through the second serial communication bus; communication signals are transmitted between the field replace unit and the baseboard management controller through the second serial communication bus and the switch chip, and the method further includes:
the communication signals are transmitted between the field replace unit and the baseboard management controller through the soldering wires or the connector between the host processor module and the riser card control board, via the switch chip and the second serial communication bus.

In some embodiments of the present disclosure, the riser card control board is further provided with a temperature sensor, and the temperature sensor is connected to the switch chip through the second serial communication bus; communication signals are transmitted between the temperature sensor and the baseboard management controller through the second serial communication bus and the switch chip, and the method further includes:
the communication signals are transmitted between the temperature sensor and the baseboard management controller through the soldering wires or the connector between the host processor module and the riser card control board, via the switch chip and the second serial communication bus.

In some embodiments of the present disclosure, the other components include a first power conversion chip, and the riser card control board is provided with a second power conversion chip; the first power conversion chip is connected to the second power conversion chip through the soldering wires or the connector between the host processor module and the riser card control board; the second power conversion chip is respectively connected to each of the add-in card slots, and is configured to transmit a processed power supply signal to each add-in card slot;
where transmitting the low-speed signals between other components and the add-in card slot through the soldering wires or the connector between the host processor module and the riser card control board and via the riser card control board and the riser card soldering board includes:
transmitting the low-speed signals between the first power conversion chip and the add-in card slot through the soldering wires or the connector between the host processor module and the riser card control board, via the second power conversion chip and the riser card soldering board.

In some embodiments of the present disclosure, the host processor module is further provided with a central processing unit and/or a logic processing element, the central processing unit and/or the logic processing element is connected to the add-in card connector, and the high-speed signals transmitted between the add-in card connector and the add-in card slot are signals output by the central processing unit and/or the logic processing element;
where transmitting the high-speed signals between the add-in card connector and the add-in card slot through the high-speed cables between the add-in card connector and the add-in card slot includes:
through the high-speed cables between the add-in card connector and the add-in card slot, transmitting the high-speed signals output by the central processing unit and/or logic processing element to the add-in card inserted in the add-in card slot between the add-in card connector and the add-in card slot.

It should be noted that for the sake of simplicity, the method embodiments are described as a series of action combinations. However, those skilled in the art should be aware that the embodiments of the present disclosure are not limited by the order of the described actions, because according to the embodiments of the present disclosure, certain steps may be performed in other orders or simultaneously. Secondly, those skilled in the art should also be aware that the embodiments described in the specification are all exemplary embodiments, and the actions involved are not necessarily necessary for the embodiments of the present disclosure.

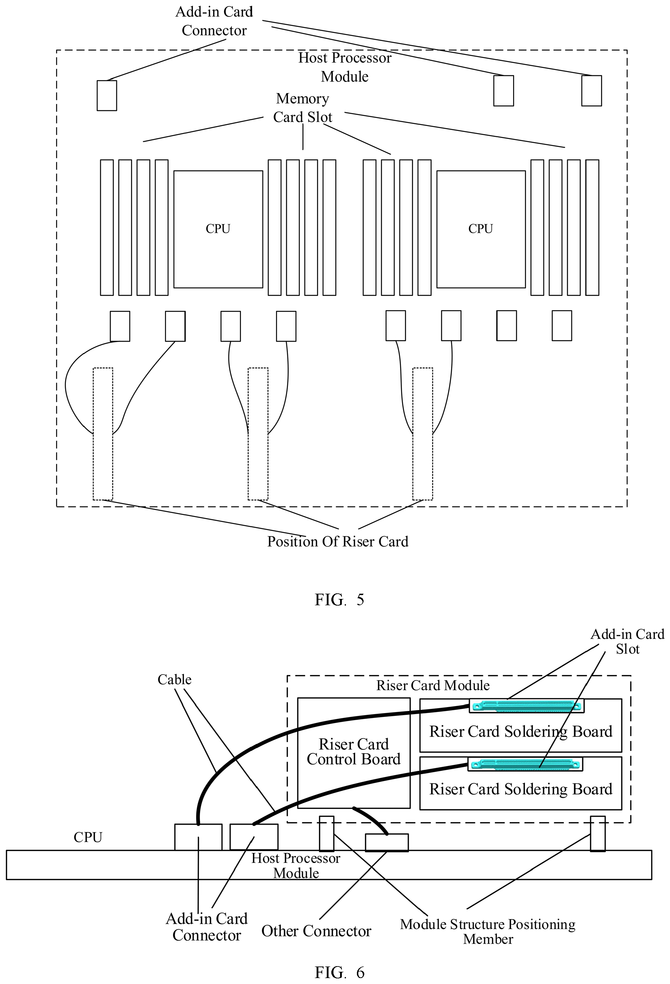

Referring to FIG. 5 and FIG. 6, a server according to an embodiment of the present disclosure is shown, the server includes the server interconnection system as described above.

Referring to FIG. 8, an electronic device provided by some embodiments of the present disclosure is shown, including a processor 801, a memory 802, and a computer program stored on the memory 802 and capable of running on the processor 801. When the computer program is executed by the processor, the above method is implemented.

Referring to FIG. 9, a computer non-volatile readable storage medium 900 provided by some embodiments of the present disclosure is shown. A computer program is stored on the computer non-volatile readable storage medium 900, and the method described above is implemented when the computer program is executed by a processor.

Referring to FIG. 10, a computer program product 1000 provided by some embodiments of the present disclosure is shown, including a computer program that implements the above method when executed by a processor.

For the device embodiments, because it is basically similar to the method embodiments, the description is relatively simple, and the relevant contents can be found in the description of the method embodiments.

The above provides a detailed introduction to the provided server interconnection system, the communication method, the server, the device, the medium, and the product. This specification applies specific examples to explain the principle and implementation of the present disclosure. The above embodiments are merely used to help understand the method and core idea of the present disclosure. Meanwhile, for general technical personnel in this field, there may be changes in the specific implementation and application scope based on the idea of the present disclosure. Therefore, the contents of this specification should not be understood as limitations to the present disclosure.

## Claims

1. A server interconnection system, comprising:
a host processor module;
a riser card module comprising a riser card control board and at least two riser card soldering boards; and
add-in card slots, wherein a number of the add-in card slots is consistent with a number of the riser card soldering boards, the host processor module is directly interconnected with a corresponding add-in card slot and configured to transmit high-speed signals and/or bypass signals, and the host processor module is connected to a corresponding add-in card slot through the riser card control board and a corresponding riser card soldering board and configured to transmit power supply signals and/or low-speed signals.

2. The server interconnection system according to claim 1, wherein,
the add-in card slot is connected to an add-in card connector in the host processor module through high-speed cables to transmit the high-speed signals and/or the bypass signals between the add-in card connector and the add-in card slot;
the riser card soldering board is connected between the riser card control board and the add-in card slot;
the riser card control board is connected to the host processor module through soldering wires or a connector, to transmit the power supply signals and/or the low-speed signals between the host processor module and the add-in card slot through the soldering wires or the connector, the riser card control board, and the riser card soldering board.

3. The server interconnection system according to claim 2, wherein other components are connected to the host processor module, and the other components are connected to the riser card control board through the soldering wires or the connector between the host processor module and the riser card control board, and are connected to the add-in card slot through the riser card control board and the riser card soldering board, to transmit the power supply signals and/or the low-speed signals between the other components and the add-in card slot.

4. The server interconnection system according to claim 3, wherein the other components comprise a baseboard management controller, and the riser card control board is provided with a switch chip;
the baseboard management controller is connected to the switch chip through the soldering wires or the connector between the host processor module and the riser card control board;
the switch chip is provided with two serial communication buses for each of add-in card slots and is connected to the add-in card slot through the two serial communication buses.

5. The server interconnection system according to claim 4, wherein the two serial communication buses comprise a first serial communication bus and a second serial communication bus; communication signals are transmitted between the baseboard management controller and the add-in card slot through the first serial communication bus;
the riser card control board is further provided with an expansion chip, the expansion chip is connected to the switch chip through the second serial communication bus, and configured to monitor whether an add-in card is inserted into the add-in card slot and feed back a monitoring signal to the baseboard management controller through the second serial communication bus.

6. The server interconnection system according to claim 5, wherein the riser card control board is further provided with a field replace unit, and the field replace unit is connected to the switch chip through the second serial communication bus; communication signals are transmitted between the field replace unit and the baseboard management controller through the second serial communication bus and the switch chip.

7. The server interconnection system according to claim 5, wherein the riser card control board is further provided with a temperature sensor, and the temperature sensor is connected to the switch chip through the second serial communication bus; communication signals are transmitted between the temperature sensor and the baseboard management controller through the second serial communication bus and the switch chip.

8. The server interconnection system according to any one of claims 3 to 7, wherein the other components comprise a first power conversion chip, and the riser card control board is provided with a second power conversion chip;
the first power conversion chip is connected to the second power conversion chip through the soldering wires or the connector between the host processor module and the riser card control board;
the second power conversion chip is respectively connected to each of the add-in card slots, and is configured to transmit a processed power supply signal to each add-in card slot.

9. The server interconnection system according to claim 1, wherein the riser card control board is provided with a sideband connector, the riser card soldering board is provided with a gold finger connector, and the riser card control board and the riser card soldering board are connected through the sideband connector and the gold finger connector.

10. The server interconnection system according to claim 9, wherein a number of the sideband connector and a number of the gold finger connector are same as the number of add-in card slots.

11. The server interconnection system according to claim 2, wherein the host processor module is further provided with a central processing unit and/or a logic processing element, the central processing unit and/or the logic processing element is connected to the add-in card connector, and the high-speed signals and/or the bypass signals transmitted between the add-in card connector and the add-in card slot are signals output by the central processing unit and/or the logic processing element.

12. The server interconnection system according to claim 1, wherein the riser card module further comprises at least two module structure positioning members, and the riser card module is fixed to a board card where the host processor module is located through the at least two module structure positioning members.

13. The server interconnection system according to claim 2, wherein the add-in card slot is a card slot for inserting peripheral component interconnect express (PCIe) add-in cards, the high-speed cables are PCIe-based cables, and the add-in card connector is a connector connected to the PCIe add-in cards.

14. A communication method based on a server interconnection system, wherein the server interconnection system comprises a host processor module, a riser card module, and add-in card slots, the riser card module comprises a riser card control board and at least two riser card soldering boards, a number of the add-in card slots is consistent with a number of the riser card soldering boards, the host processor module is directly interconnected with a corresponding add-in card slot, and the host processor module is connected to a corresponding add-in card slot through the riser card control board and a corresponding riser card soldering board; the communication method comprising:
transmitting high-speed signals and/or bypass signals between the host processor module and the corresponding add-in card slot through a direct interconnection structure between the host processor module and the corresponding add-in card slot; and
transmitting power supply signals and/or low-speed signals between the host processor module and the corresponding add-in card slot through the riser card control board and the corresponding riser card soldering board.

15. The communication method according to claim 14, wherein the add-in card slot is connected to an add-in card connector in the host processor module through high-speed cables, the riser card soldering board is connected between the riser card control board and the add-in card slot, and the riser card control board is connected to the host processor module through soldering wires or a connector;
wherein transmitting the high-speed signals and/or the bypass signals between the host processor module and the corresponding add-in card slot through the direct interconnection structure between the host processor module and the corresponding add-in card slot comprises: transmitting the high-speed signals and/or the bypass signals between the add-in card connector and the add-in card slot through the high-speed cables between the add-in card connector and the add-in card slot;
transmitting the power supply signals and/or the low-speed signals between the host processor module and the corresponding add-in card slot through the riser card control board and the corresponding riser card soldering board comprises: transmitting the power supply signals and/or the low-speed signals between the host processor module and the add-in card slot through the soldering wires or the connector between the host processor module and the riser card control board and via the riser card control board and the riser card soldering board.

16. The communication method according to claim 15, wherein other components are connected to the host processor module, and the other components are connected to the riser card control board through the soldering wires or the connector between the host processor module and the riser card control board, and are connected to the add-in card slot through the riser card control board and the riser card soldering board;
wherein transmitting the power supply signals and/or the low-speed signals between the host processor module and the add-in card slot through the soldering wires or the connector between the host processor module and the riser card control board and via the riser card control board and the riser card soldering board comprises:
transmitting the low-speed signals between other components and the add-in card slot through the soldering wires or the connector between the host processor module and the riser card control board and via the riser card control board and the riser card soldering board.

17. The communication method according to claim 16, wherein the other components comprise a baseboard management controller, and the riser card control board is provided with a switch chip; the baseboard management controller is connected to the switch chip through the soldering wires or the connector between the host processor module and the riser card control board; the switch chip is provided with two serial communication buses for each of add-in card slots and is connected to the add-in card slot through the two serial communication buses;
wherein transmitting the low-speed signals between other components and the add-in card slot through the soldering wires or the connector between the host processor module and the riser card control board and via the riser card control board and the riser card soldering board comprises:
transmitting the low-speed signals between the baseboard management controller and the add-in card slot through the soldering wires or the connector between the host processor module and the riser card control board and via the switch chip, the two serial communication buses, and the riser card soldering board.

18. The communication method according to claim 17, wherein the two serial communication buses comprise a first serial communication bus and a second serial communication bus, and communication signals are transmitted between the baseboard management controller and the add-in card slot through the first serial communication bus;
the riser card control board is further provided with an expansion chip, the expansion chip is connected to the switch chip through the second serial communication bus, and configured to monitor whether an add-in card is inserted into the add-in card slot and feed back a monitoring signal to the baseboard management controller through the second serial communication bus;
wherein transmitting the low-speed signals between the baseboard management controller and the add-in card slot through the soldering wires or the connector between the host processor module and the riser card control board and via the switch chip, the two serial communication buses, and the riser card soldering board comprises:
transmitting the communication signals between the baseboard management controller and the add-in card slot through the soldering wires or the connector between the host processor module and the riser card control board and via the switch chip, the first serial communication bus, and the riser card soldering board; and
monitoring whether an add-in card is inserted into the add-in card slot through the expansion chip and via the riser card soldering board to obtain the monitoring signal, and feeding back the monitoring signal to the baseboard management controller through the soldering wires or the connector between the host processor module and the riser card control board and via the expansion chip, the second serial communication bus, and the switch chip.

19. The communication method according to any one of claims 16 to 18, wherein the other components comprise a first power conversion chip, and the riser card control board is provided with a second power conversion chip; the first power conversion chip is connected to the second power conversion chip through the soldering wires or the connector between the host processor module and the riser card control board; the second power conversion chip is respectively connected to each of the add-in card slots, and is configured to transmit a processed power supply signal to each add-in card slot;
wherein transmitting the low-speed signals between other components and the add-in card slot through the soldering wires or the connector between the host processor module and the riser card control board and via the riser card control board and the riser card soldering board comprises:
transmitting the low-speed signals between the first power conversion chip and the add-in card slot through the soldering wires or the connector between the host processor module and the riser card control board and via the second power conversion chip and the riser card soldering board.

20. A server, comprising the server interconnection system according to any one of claims 1 to 13.

21. An electronic device, comprising a processor, a memory, and a computer program stored on the memory and capable of running on the processor, wherein the computer program, when executed by the processor, implements the method according to any one of claims 14 to 19.

22. A computer non-transitory readable storage medium, wherein a computer program is stored on the computer non-transitory readable storage medium, and when the computer program is executed by a processor, the method according to any one of claims 14 to 19 is implemented.

23. A computer program product comprising a computer program that, when executed by a processor, implements the method according to any one of claims 14 to 19.
